# EUROPEAN PATENT APPLICATION

(11) **EP 1 667 315 A2**
(43) Date of publication of application: **07.06.2006**
(21) Application number: 05252472.5
(22) Date of filing: 20.04.2005
(51) Int. Cl.: H02M 7/00

(54) **Modular power supply assembly**

(30) Priority: 03.12.2004 US 4644
(71) Applicant: MagneTek, Inc., Los Angeles, CA 90024 (US)
(72) Inventor: Weber, William J., Thiensville, Wisconsin 53092 (US); Bertolas, Perry, Hartland, Wisconsin 53029 (US); Nielsen, Henrik B., Germantown, Wisconsin 53022 (US); Pomes, James A., Whitefish Bay, WI 53217 (US); Vollrath, Don, New Berlin, Wisconsin 53151 (US)
(74) Representative: Strachan, Victoria Jane

(57) **Abstract**

A modular power converter that is easily adapted to a wide variety of applications separates the substantially constant power conversion functions from the largely application specific components of the power converter. A core power conversion module is provided that includes the converter functions and thermal systems of a typical power converter. An output connector is adapted to couple the core module to an application specific module that may contain application specific components such as magnetics, filters, contactors, relays, current sensors, etc. An easily reconfigurable cabinet is included that is readily adaptable to particular applications.

## Description

We, William J. Weber, James A. Pomes, Perry Bertolas, Don Vollrath, and Henrik B. Nielsen, citizens of the United States, have invented a new and useful "Modular Power Supply Assembly."

### CROSS-REFERENCES TO RELATED APPLICATIONS

Not Applicable

### STATEMENT REGARDING FEDERALLY SPONSORED RESEARCH OR DEVELOPMENT

Not Applicable

### REFERENCE TO SEQUENCE LISTING OR COMPUTER PROGRAM LISTING APPENDIX

Not Applicable

### BACKGROUND OF THE INVENTION

Power converters are well known devices that are generally used to convert power from one set of power, voltage and current parameters from a power source into a second set of voltage and current parameters for use by a load. Most often, power converters are used to convert a standard AC supply voltage into a lower DC voltage or an AC voltage of fixed or variable frequency for use by DC motors, AC motors, or connection to the power grid. Most conventional power converters are designed for a particular product having a particular set of power requirements and, thus, cannot usually be used for multiple applications having different topologies and power requirements. For example, in high power applications, the switches used in the power converter (such as insulated gate bipolar transistors (IGBTs)) must be carefully sized to handle the highest anticipated load requirements. Power switches such as IGBTs are expensive and have been tightly integrated into the core power converter, thereby reducing flexibility and gains available in high volume cost reductions via reuse of the core structure and reduction in reengineering development times. As a result of this tight integration, new power converter configurations are continuously being designed for each new application. Designing a new power converter is a process that requires substantial time and effort by skilled individuals. Furthermore, supporting a large number of different power converters requires stocking a large number of different parts and assemblies and reduces economies of scale.

A particular type of power converter product in common use today is a motor drive. A family of motor drive product is typically designed to cover a range of power levels, but this family of motor drives is made up of several different products designed to optimize the cost of the hardware (electronic components and packaging) for a relatively narrow power range and specific drive application. For example, a typical motor drive may integrate one or more of the following: an AC to DC converter (simple diode, or regenerative converters (boost or buck)), a DC bus regulator, an inverter, magnetics, filters, relays, control logic, sensors, and input/output communications or interfaces, into a single package for a narrow power range. The end uses for such motor drive assemblies include (but are not limited to) elevators, material handling devices, cranes and hoists, alternative energy sources such as windmills and fuel cells, and general industrial applications. However, the applications of a motor drive are limited to the conversion of power from an AC or DC supply for use by particular AC or DC motor having a defined set of power, voltage and current parameters.

In some conventional motor drive applications, multiple inverters are used in a system configuration to handle multiple drives in an application. Such a system typically has a converter in the front end to create a DC supply bus for distributing power to the multiple inverters. In conventional designs, the converter is designed to a specific topology (regenerative or non-regenerative) to provide a specific amount of power having a specified set of parameters and, therefore, must be redesigned for each application.

Another limitation in the design of conventional motor drives is heat management. A typical motor drive might include a fan, heat sink, heat exchanger, or cold plate as a complete heat management system. In conventional power supply designs, the physical location and implementation of these thermal management components often interferes or limits flexibility in providing connections to the onboard magnetics or limits the ability the switch to different cooling schemes such as liquid cooling and heatpipes. In addition, conventional motor drives will stack or combine multiple IGBT switches such that heat from the lower IGBTs is transferred to the switches at the top of the stack.

Therefore, what is needed is a modular power converter assembly that can be easily and inexpensively adapted for a wide variety of products having a wide variety of power requirements and thermal management systems.

### BRIEF SUMMARY OF THE INVENTION

One embodiment of the present invention is directed toward a modular power converter assembly for providing power to a power consuming device. The modular power converter includes a core power conversion module for receiving power from a power source and converting the source power from a first set of power characteristics to a second set of power characteristics. The core power conversion module has input connectors, a set of power conversion switches and associated electronics, bus capacitors, and output connectors. The core power conversion module also includes a thermal management system. The core power conversion module is designed such that it can be connected in parallel with one or more additional core power conversion modules such that the power output of the core power conversion modules is combined. The bus capacitance of the core power conversion module is preferably approximately equally distributed along the output. An application specific module is adapted to be removably coupled to the output connector of the core power conversion module. The application specific module contains power components and application specific components designed to interface the core power conversion module to a particular power consuming application. The application specific module may contain a filter, a contactor, a relay and a current sensor.

Another embodiment of the present invention is directed toward a power converter for receiving supplied electrical power having a first set of parameters and converting the supplied electrical power into load electrical power having a second set of parameters. The power converter includes a power conversion module adapted to receive one of a plurality of application specific modules. The power conversion module has at least one power conversion switch and the application specific module has at least one power component. The power conversion component is preferably mounted on a sub-panel assembly of the modular power converter. The core power module has an AC or DC bus and is adapted to be connected in parallel with a second core power module such that the bus of the core power module is connected in parallel with a bus of the second core power module. The core power module also preferably includes the thermal management system for the core power conversion assembly. The power conversion module can be configured to allow for bi-directional power flow. The application specific module may contain at least one of the following power components such as a filter, a contactor, a relay or a current sensor.

Yet another embodiment of the present invention is directed toward a modular power converter system adapted to provide varying amounts of power having different power characteristics. The power converter includes a core power converter module having at least one power converter switch for receiving power from an AC or DC power source and converting the source power to a DC or AC voltage. The converted voltage is coupled to a bus. The core module has an output connector adapted to receive at least one of a plurality of application specific modules such that the bus voltage is coupled to the application specific module. In addition, the core module is configured to be connected in parallel with a second core module such that the bus of the core module is electrically coupled to a bus of the second core module. The core module further includes an option board coupling for receiving one of a plurality of option boards. At least one power converter switch is mounted on an option board of the core module. The modular power converter is configured to allow for bi-directional power flow. The application specific power inverter modules may contain at least one of the following power components such as a filter, a contactor, a relay and a current sensor.

Yet another embodiment of the present invention is directed toward a modular power converter design. The design includes mechanical packaging means that are modular and scalable. This modularity and scalability allows for a variety of power topologies to be quickly implemented by selection of the appropriate thermal and or power semiconductor combination, which makes up the power conversion module. This flexibility in design provides power conversion that is modular and scalable for a variety of topologies and applications. Modular and flexible thermal management means allow the cooling scheme to be changed to air or liquid or heat pipes. Modular hardware logic is provided that can be configured to handle various applications and customer requirements. Control software is provided that is modular and flexible to support the application and power modularity. The design can be used with an AC motor, DC motor, grid connected loads, grid independent loads, bidirectional wind generator drives, and any other application with a DC input/output or AC input/output and handle conversion from any AC or DC source to any AC or DC load.

### BRIEF DESCRIPTION OF THE SEVERAL VIEWS OF THE DRAWINGS

Fig. 1 is a plan view of a modular power converter constructed in accordance with an embodiment of the present invention.

Fig. 2(a) is a plan view of the core power module assembly constructed in accordance with the embodiment of the invention shown in Fig. 1.

Fig. 2(b) is a plan view of the core power module assembly of Fig. 2(a) with the enclosure cover removed

Fig. 2(c) is a plan view of the core power module assembly of Figs. 2(a) and 2(b) with the user interface and enclosure cover removed to show the locations of the capacitor bank and power switches.

Fig. 3(a) is a plan view of one embodiment of an application specific module constructed as used in the embodiment of the present invention shown in Fig. 1.

Fig. 3(b) is a plan view of a second embodiment of an application specific module as used in the embodiment of the present invention shown in Fig. 1.

Fig. 4 is block diagram illustrating an arrangement of multiple functional and physical modules in accordance with the present invention.

Fig. 5 is a block diagram representation of the distribution of functions between the modules of an embodiment of the present invention.

Fig. 6 is a plan view of a cabinet structure for mounting a motor drive in accordance with one embodiment of the present invention.

Fig. 7 is a plan view of an interconnected cabinet structure for mounting a motor drive in accordance with an embodiment of the present invention.

Fig. 8 is a plan view of a motor drive constructed in accordance with an embodiment of the present invention having a power reactor mounted to the core module.

Fig. 9 is a plan view of a motor drive constructed in accordance with an embodiment of the present invention.

Fig. 10 is a plan view of a motor drive constructed in accordance with an embodiment of the present invention.

Fig. 11 is a plan view of a motor drive constructed in accordance with an embodiment of the present invention.

Fig. 12 is a plan view of a heat sink for use with an embodiment of the present invention.

Fig. 13 is a plan view of a water cooled plate for use with an embodiment of the present invention.

Fig. 14 is a plan view of an exemplary input panel for an application specific module constructed in accordance with an embodiment of the present invention.

Fig. 15 is a plan view of an exemplary output panel for an application specific module constructed in accordance with an embodiment of the present invention.

Fig. 16 is a plan view of an exemplary input/output panel for an application specific module constructed in accordance with an embodiment of the present invention.

### DETAILED DESCRIPTION OF THE INVENTION

The present invention is directed toward a modular power converter having a power conversion module that can be quickly and easily configured to support a wide range of power levels and circuit topologies. The applications of the power conversion modules include, but are not limited to, inverters, boost or buck converters, converters, regenerative inverters, and bus regulators. Some of the end applications include, but are not limited to, elevators, alternative energy applications such as windmills, fuel cells, material handling, cranes and hoists, and a wide range of other industrial applications.

In accordance with the present invention, an easily adaptable power converter is implemented by creating an extremely flexible and modular power conversion assembly. The modularity of the assembly is designed to allow the use of the same or very similar hardware assemblies to produce multiple power levels and/or multiple topological configurations by simply reconfiguring the associated input and output electronics, the control logic configuration, the size of the semiconductor switch used, and the input and output switch gear for multiple power conversion applications.

A typical power converter, such as a motor drive, has a converter, a thermal management system, an inverter, magnetics, filters, relays, control logic, current sensors and input and output interface electronics. Preferred embodiments of the present invention separate these components by placing components of the converter and thermal system on a core module. The application specific components, such as magnetics, filters, current sensors, relays, etc., are located on a separate application specific module. By using the same basic power conversion module for a wide range of power sizes and applications, the power conversion modules can be produced with economies of scale that will allow for significant cost advantages. In addition, the modules are designed to be connected in parallel to accommodate multiple power level outputs and power flow including bi-directional.

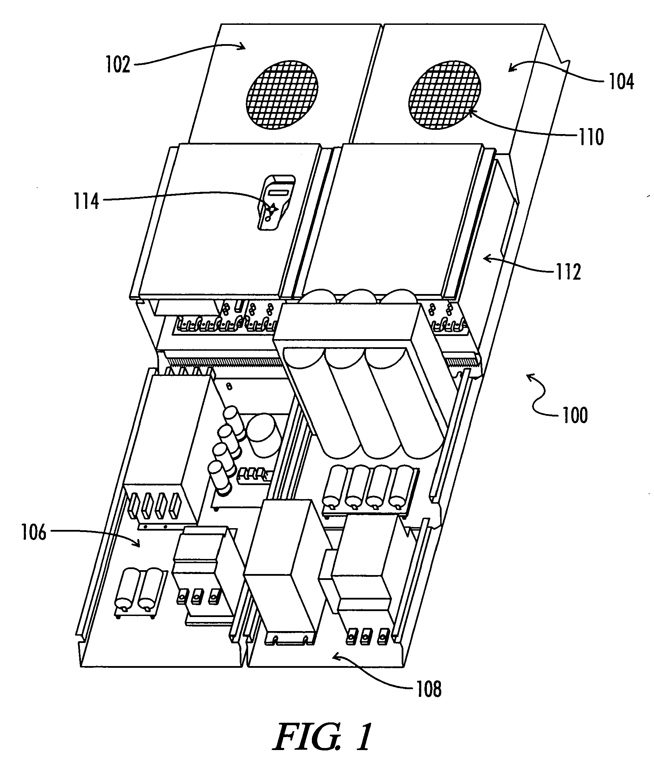

Referring now to FIG. 1, a power converter assembly 100 constructed in accordance with one embodiment of the present invention is shown. In the embodiment of FIG. 1, the power converter assembly 100 includes two core power conversion modules 102 and 104 (sometimes referred to as "core modules") connected to two application specific interface modules 106 and 108. Power conversion and thermal management are handled by the core power modules 102 and 104. The magnetics, filters, contactors, relays, current sensors and other application specific components are not part of the power conversion modules 102 and 104. This allows the power conversion modules 102 and 104 the flexibility to handle a very wide range of applications, power levels, and topologies without requiring that they be redesigned for each particular application. Thus, by decoupling the application specific components 106 and 108 from the core power conversion modules 102 and 104, a power supply assembly is created that can be easily changed depending upon the application.

The core modules 102 and 104 preferably contain the thermal system 110, gate drive and power supply components for the power conversion switches, optional power interface electronics, control electronics and configurable input/output interface electronics, all mounted within a housing 112. The control electronics are programmable so that they can be varied for individual applications. The application specific interface modules 106 and 108 include application specific components such as AC/DC contactors, current sensors, electromagnetic interference filters, etc. As shown in FIG. 1, the core modules 102 and 104 can be connected in parallel to increase the maximum power handling capabilities of the power supply 100 and supply multiple application specific modules 106 and 108. This is preferably accomplished by providing each core module 102 and 104 with a DC bus that can be connected in parallel with the DC bus of another core module. Thus, the same basic power conversion module 102 or 104 may be used to produce a wide range of power levels or ratings. Conversely, when conventional systems use different power conversion elements such as inverters or drives with all the associated switch gear connected in parallel, there are custom modifications that must be made to each power module to allow for the parallel operation. The present invention uses the same core power conversion module 102 and 104 for multiple levels to make this parallel operation simpler. In such a case, single user interface 114 can be used to control each of the core modules 102 and 104.

The electrical and mechanical designs of the thermal system, gate drive if IGBTs or a driving circuit for other power semiconductor switches and power supply components, optional power interface electronics, control electronics, input/output interface electronics, AC/DC contactors, current sensors, electromagnetic interference filters, etc., are conventional and well understood by those of skill in the art and are not shown in detail. The present invention is directed to the novel modular arrangement and architecture of these functional components within the power supply assembly.

Typically, the magnetics, filters, etc., which are application and power dependent, are combined with the basic power conversion switches (IGBTs for example) and with the thermal system. By separating the application specific components from the non-application specific components, the basic power conversion module can be reused with the required application specific components. Thus, the core modules can be built on a separate high volume, highly efficient line and married with the application specific power level components at a separate manufacturing location. The input and output power semiconductor switches, such as the IGBTs, are mounted on a flexible thermal system assembly including a heatsink (air or liquid) for easy configuration and flexibility. When modifications to the power semiconductor switches of the core modules 102 and 104 are required, they can be accomplished by simply replacing the power semiconductor switches mounted on a flexible thermal assembly (air or liquid). However, the same IGBT or equivalent power semiconductor switch may often be used in the core power conversion module for multiple applications or topologies simply by altering the application specific sub-panels and re-programming of the control software and installing the proper hardware logic module.

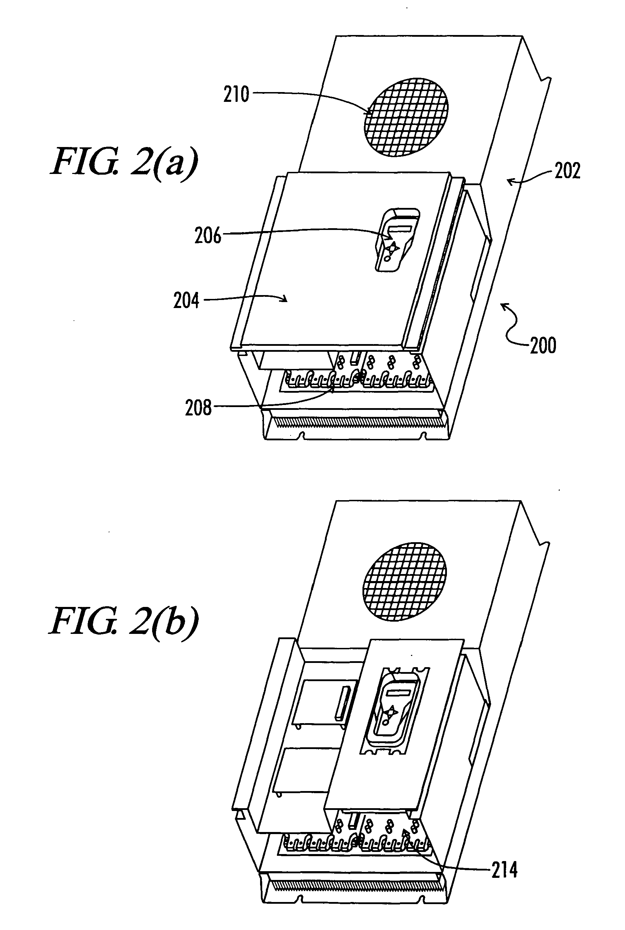

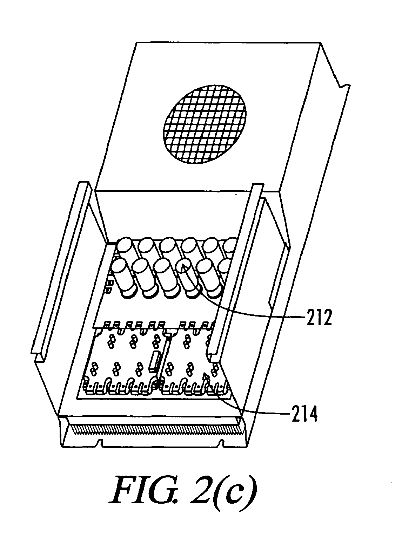

Referring now to FIGS. 2(a-c), an embodiment of a core power module 200 is shown. The core power module 200 (102, 104 on Fig. 1) has an enclosure 202 that houses and protects the internal components of the module. The enclosure 202 includes a cover 204 that can be removed as shown in FIGS. 2(b) and 2(c). The enclosure 202 is designed to be modular and flexible such that it can easily be configured to a variety of applications. For example, the number and configuration of the control electronics can easily be changed to implement the application requirements. In addition, the sides of the enclosure 202 may be removed such that multiple core modules 200 can be easily connected in parallel thereby providing for maximum expandability. A user interface 206 is also provided that allows a user to reset or configure the power converter. The user interface 206 may be a remote control for a motor drive. However, it will be readily appreciated by those skilled in the art that any user inputs required by a particular application can be incorporated into the user interface 206 with minimal modification to the core module 200. The core power module 200 has an electrical interface 208 that allows the application specific circuitry to be coupled to the core module.

A vent 210 is provided on the core power module 200 that allows the thermal system 210 to dissipate heat. The thermal system, which includes components such as a fan, heat sink, heat exchanger and/or liquid cooled plate, is oriented such that the interface 208 to the magnetics is not impeded. This makes it easy to connect to and configure the magnetics. As will be appreciated by those skilled in the art of power converter electronics, the thermal management function of the power module 200 can be implemented in accordance with either an air or liquid cooled approach.

As shown in Fig. 2(c), the core module 200 includes a capacitor bank 212 and switching devices 214 used to convert the source power supply from one set of electrical parameters to another. The switching devices 214 (sometimes referred to herein as "IGBTs" or "power semiconductor switches") are preferably mounted on a heat sink to improve the ability of the core module 200 to dissipate heat and therefore handle applications requiring higher amounts of power. In addition, the switching devices 214 in the core power conversion module 200 are not stacked vertically or combined such that the heat loss of the lower one is transferred to the top one. This allows the core power conversion module 200 to have more application flexibility and reduces the thermal stress on the switching devices 214 in the converter. The thermal efficiency of not stacking the power conversion elements of the converter and inverter also allows for more efficient use of power semiconductor devices such as IGBTs. The switching devices 214 are also preferably mounted a thermal subsystem that can easily be replaced without the need to redesign or reconfigure the core power conversion module 200.

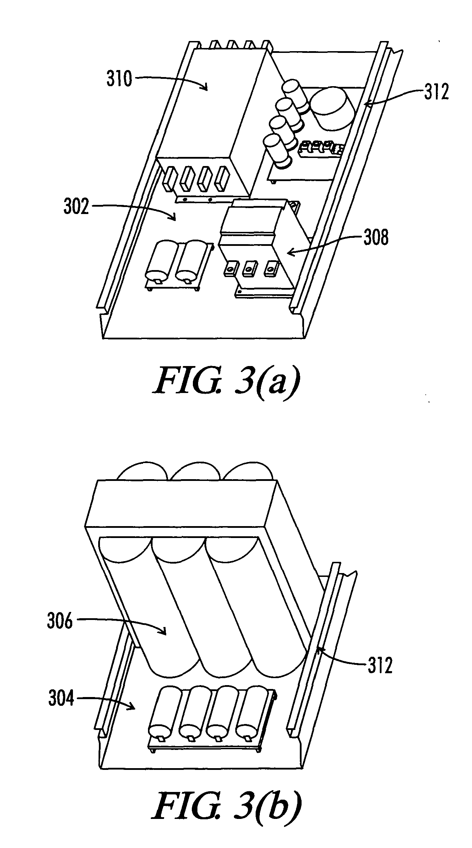

Referring now to FIGS. 3(a) and 3(b), sample application specific modules 302 and 304 are shown. The application specific modules 302 and 304 contain application specific components such as magnetic transformers and inductors 306 (sometimes collectively referred to herein as "magnetics"), contactors 308, filters 310, relays, current sensors, etc. The application specific module housing 312 is designed to mate with the core module enclosure 202. In addition, contacts (not shown in FIG. 3) are provided on the application specific modules 302 and 304 that allow them to electrically connect to the core module 200 (102, 104 on Fig. 1). The application specific modules shown in FIG. 3 are only exemplary and it will be readily appreciated by those skilled in the art that an extremely wide variety of application specific modules 302 and 304 could be designed to physically and electrically interface with the core module of the present invention.

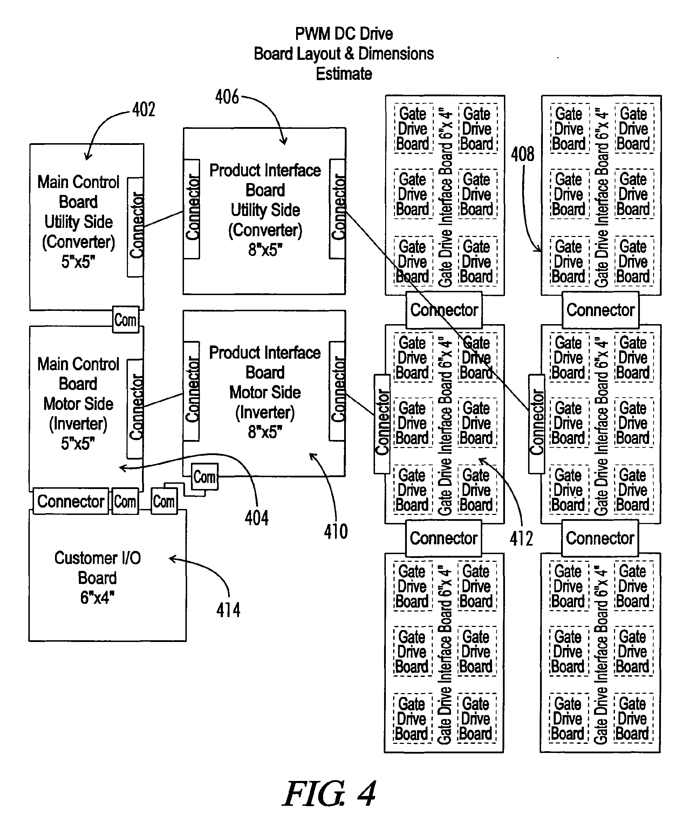

A fundamental approach of the present design is to separate the typical drive inverter and converter design functions of a power converter into separate assemblies. Referring now to FIG. 4, a block diagram of the layout of one embodiment of the control logic electronics in the present invention is shown. A converter or utility side main control board 402 is provided for the utility side converter and an inverter or motor side main control board 404 is provided for the motor side inverter. The utility side main control board 402 is connected to a product interface board 406 for the utility side converter. The product interface board 406 is in turn connected to a series of gate drive boards 408. In a similar fashion, the inverter main control board 404 is connected to a product interface board 410 for the motor side inverter, which in turn is connected to a series gate drive boards 412. A customer input/output board 414 is also provided that allows the power converter to be coupled to and adapted for a particular customer application. The low level control and interfacing hardware is designed to have optional versions for application specific requirements. The low level architecture is also designed to have a flexible design such that new software or optional assemblies is all that is needed to handle new applications. For example, the product interface boards 406 and 410 are designed such that they can be easily replaced with optional interface boards tailored to a specific application. In addition, the gate drives are placed on gate drive boards 412 and 418 such that they can easily be replaced with alternative gate drive boards having different properties. Thus, dividing the power converter into a series of interconnected boards allows the power converter to be readily adapted for individual applications simply by reconfiguring only those boards that are required for the application.

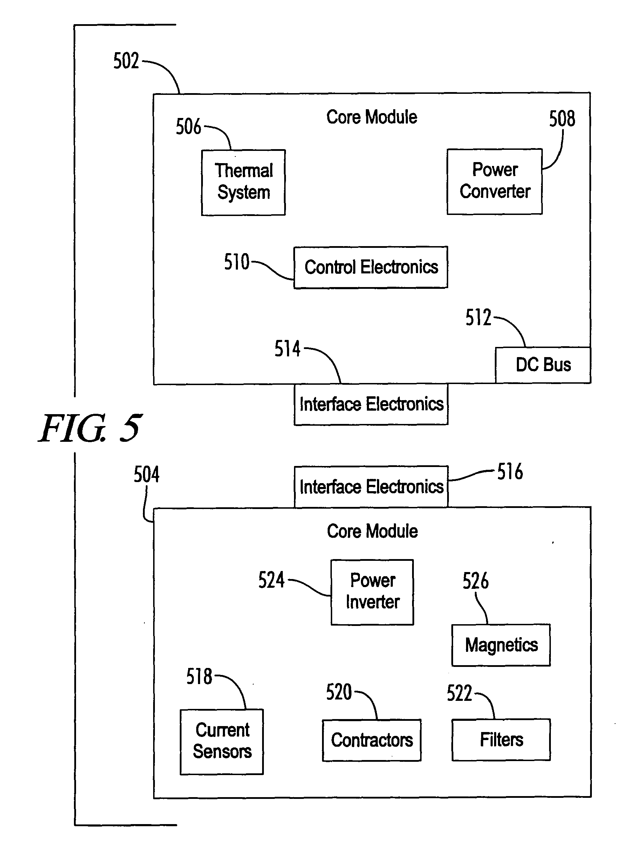

Referring now to FIG. 5, a block diagram illustrating the division of power converter functions between the core module 502 (102, 104 on Fig. 1) and the application specific module 504 (302, 304 on Figs. 3(a) and 3(b) is shown. The core module 502 contains the thermal system 506, power converter power semiconductor switches 508 and control electronics 510. The thermal system 506 is positioned in the core module 502 such that it will not interfere with the interface electronics 514. The power converter power switches 508 is provided on a sub-assembly or option board such that it can be easily replaced with a second power converter 508 to alter the performance characteristics of the power converter. The control electronics 510 are preferably programmable such that the performance of the core module 502 can also be altered simply by reprogramming the control electronics 510. Interface electronics 514 are used to couple the core module 502 to the application specific module 504. In addition, the core module 502 preferably provides access to a DC bus 512 such that the DC buses 512 of multiple core modules 502 can be connected in parallel to provide increased power levels.

The application specific module 504 includes interface electronics 516 for mating with the interface electronics 514 of the core module 502 and receiving the output of the core module 502. The application specific module 504 shown in FIG. 5 includes a power inverter 524, current sensors 518, contactors 520, filters 522 and magnetics 526. However, as will be appreciated by those skilled in the art, the application module 504 will be specifically tailored to a particular application and the exact components on the application modules will depend upon the particular application to which it is tailored.

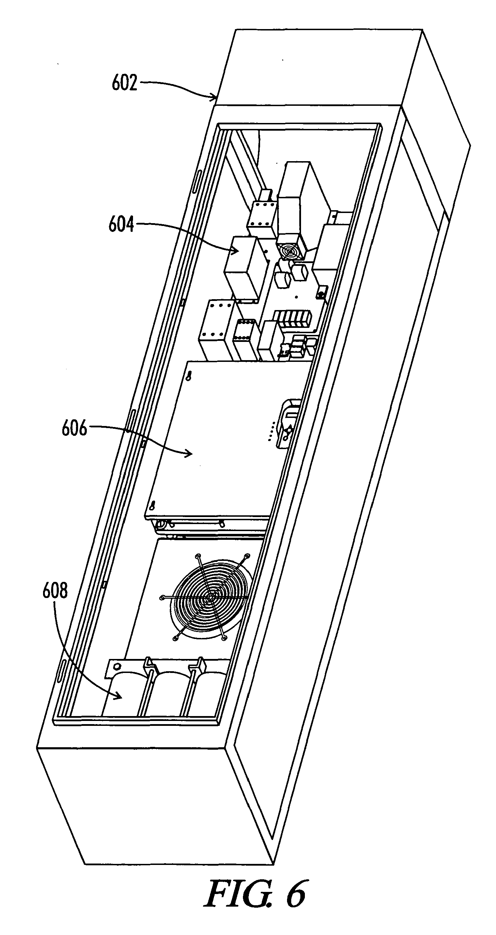

Various power converter arrangements constructed in accordance with embodiments of the present invention are shown in Figs. 6-17. More particularly, Fig. 6 shows a modular cabinet structure 602 for mounting an embodiment of the present invention. The application specific module has an input /output panel 604 that configures the inputs and outputs of the power converter. The power converter 606 is contained within the core power conversion module and the power filter reactor 608 for the motor drive is mounted near the thermal system of the core module. The reactor 608 in this application is used by the regenerative converter as an impedance between AC Line and the DC bus. In this case the reactor is placed on the floor of the cabinet because it is too heavy to mount on the subpanel.

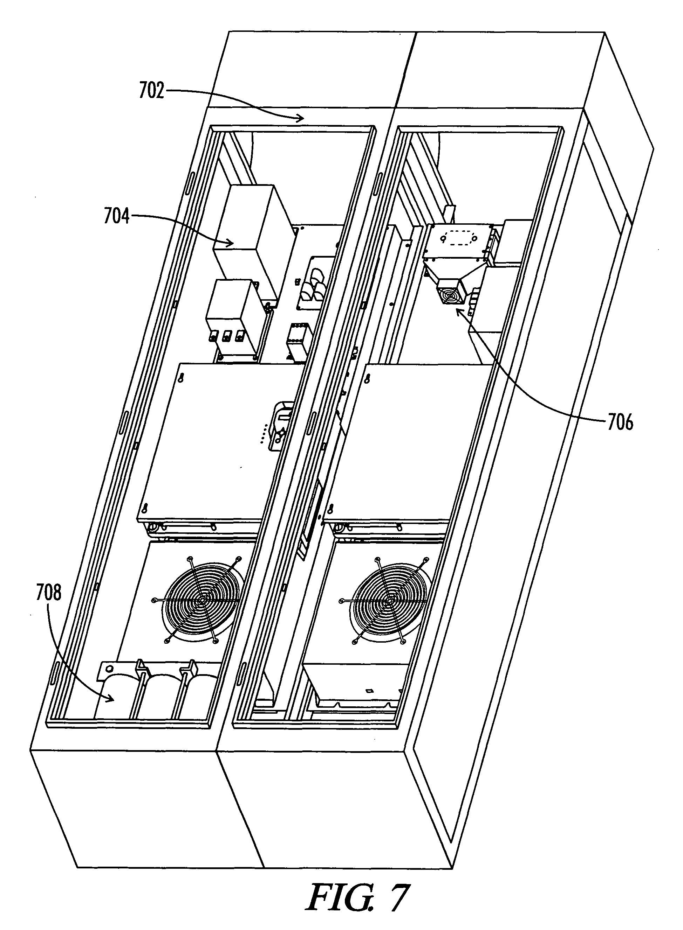

Fig. 7 is a plan view of an interconnected cabinet structure 702 for mounting a motor drive in accordance with an embodiment of the present invention. The cabinets 704, and the power converters mounted therein, are designed to be connected in parallel to accommodate applications requiring multiple power converters or large amounts of power in much the same way as the core modules themselves. The cabinet is dimensioned such that the power reactor 708 can be mounted adjacent to the thermal system. The input panels 704 and output panels 706 are mounted in adjacent ends of the cabinet 702 to facilitate connection to the external devices.

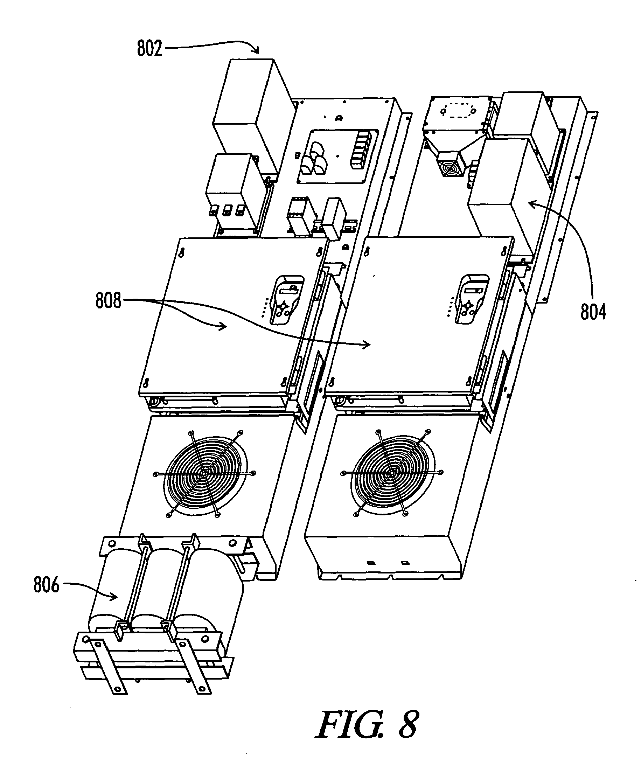

Fig. 8 is a plan view of the motor drive of Fig. 7 removed from the cabinet 802. The power reactor 806 is mounted on end of the core module. The input 802 and output 804 panels are mounted on the application specific module and coupled to the power converters 808 mounted on the core modules. The power converter tied to input subpanel 802 is used as an input converter, which is used for regeneration, and the other power converter tied with the output 804 of the application specific module is used as an inverter to run a motor. This is an example of how the same basic power conversion module is being used to do two different functions. Thus, the modularity and flexibility of this invention are unique.

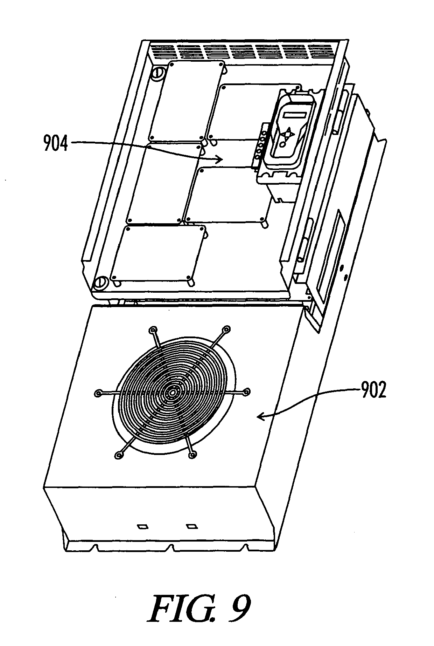

Fig. 9 is a plan view of an exemplary power conversion module constructed in accordance with an embodiment of the present invention. The cooling system 902 and the power converter assembly 904 are shown mounted on the core module.

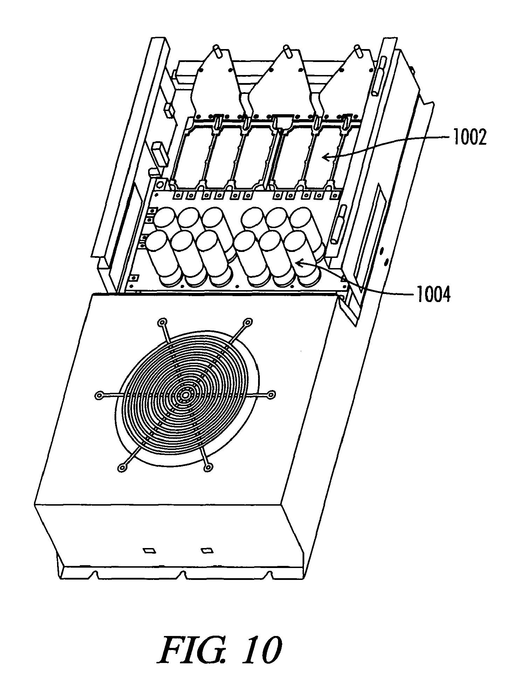

Fig. 10 is a plan view of the power conversion module of Fig. 9 with the control sub panel removed to shown the switches 1002 and a capacitor bank 1004 mounted on the core module.

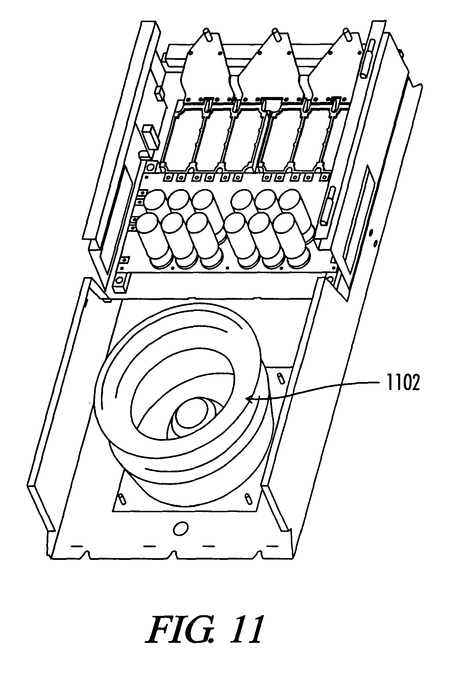

Fig. 11 is a plan view of the core module for the power conversion module of Fig. 10 with the thermal cooling system cover removed to reveal the power conversion module's cooling blower 1102.

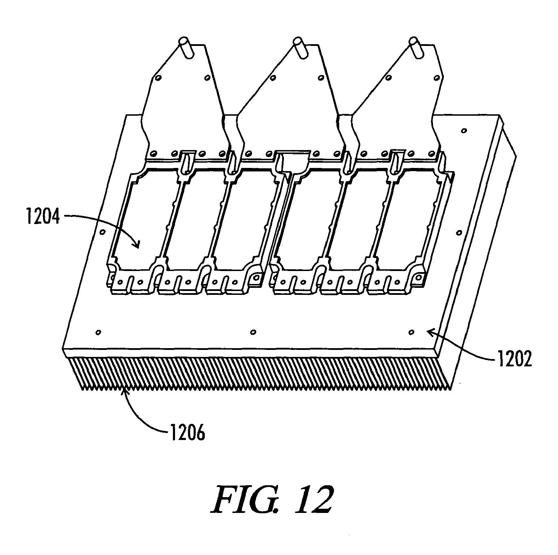

Fig. 12 is a plan view of an exemplary air-cooled heat sink 1202 for use with an embodiment of the present invention. The heat sink 1202 is thermally connected to switches 1204 and includes cooling air fins 1206.

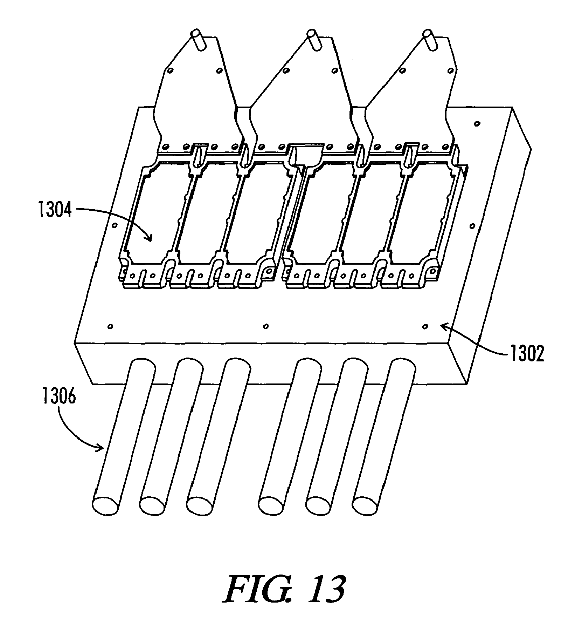

Fig. 13 is a plan view of a liquid-cooled heat sink 1302 for use with an embodiment of the present invention. The water-cooled plate 1302 is thermally connected to switches 1304 and includes conventional cooling water inputs and outputs 1306.

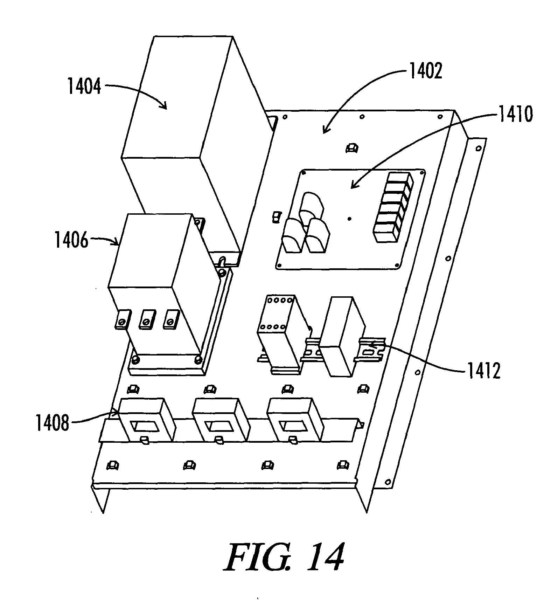

Fig. 14 is a plan view of an exemplary input panel for an application specific module constructed in accordance with an embodiment of the present invention. As discussed above, the input panel 1402 includes application specific components such as an electromagnetic interference filter 1404, AC contactor 1406, current sensors 1408, pre-charge PC board 1410, and pre-contactor fuses 1412.

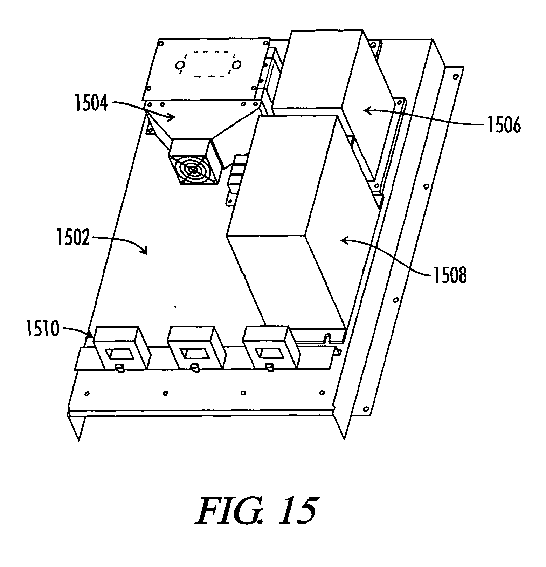

Fig. 15 is a plan view of an output panel 1502 for an application specific module constructed in accordance with an embodiment of the present invention. The output panel 1502 includes a DC field assembly 1504, a DC contactor 1506, a filter 1508, and current sensors 1510. The input panel 1402 and output panel 1502 for the application specific modules are exemplary only and, in accordance with the present invention, a wide variety of input and output panels could be mounted on the application specific module.

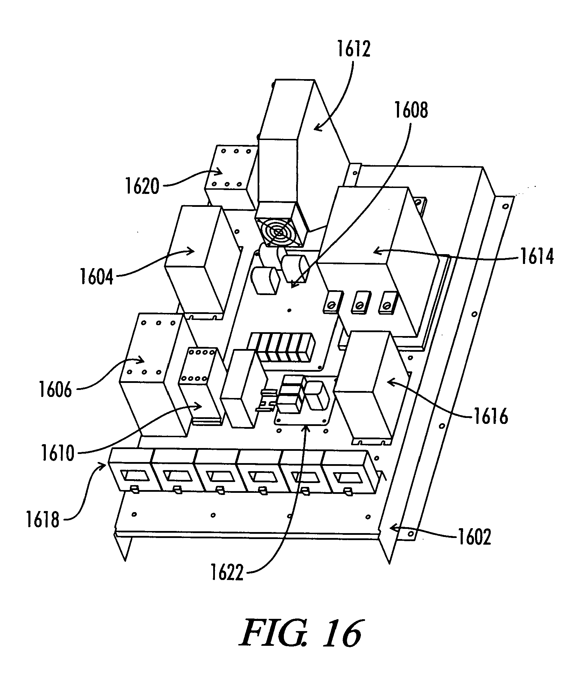

Fig. 16 is a plan view of a combination input/output panel 1602 for the application specific module of a single module motor drive application constructed in accordance with an embodiment of the present invention. The input/output panel 1602 includes all the application specific input/output components such as a electromagnetic interference filter 1604, AC contactor 1606, precharge PC board 1608, pre-charge contactor fuses 1610, DC field assembly 1612, DC contactor 1614, filter 1616, current sensors 1618, field terminal block 1620 and DC contactor PC board 1622.

The preferred embodiments of the present invention can handle bi-directional power flow for applications in fields such as general industrial, elevators, cranes and hoists, material handling and alternative energy. For example, in elevator applications, the design can be configured to allow for a full four quadrant or fully line regenerative power converter for both AC and DC motors. The input or output power can be an AC or DC voltage. Because the topologies can be easily reconfigured, the type of power that is sourced is flexible. In an elevator end use application, the power source is the AC line; however, if one reconfigures the system to a simple output inverter, the input can be a DC source from a photovoltaic panel.

The modular power converter of the present invention is an improvement over the prior art in that it allows the same basic core assemblies to be used to generate multiple power levels, allows for paralleling of the conversion modules at the DC bus level, and provides for flexible controls and input/output interfacing. In addition, the present invention provides for easy AC and DC control and bi-directional power flow control. The power conversion elements are contained within a configurable or expandable enclosure that accommodates a wide range of applications. The product resources required in terms of time and cost for a wide range of applications is dramatically reduced because the time to develop the product is limited to the selection of the non-power conversion elements and the selection of the proper option boards. In conventional motor drive designs, the objective was to optimize the complete power conversion cost at a particular size, power and limited application focus. The present invention optimizes the cost and size of power conversion but separates out the integration of the application and power specific elements.

Thus, although there have been described particular embodiments of the present invention of a new and useful Modular Power Converter Assembly, it is not intended that such references be construed as limitations upon the scope of this invention except as set forth in the following claims.

## Claims

1. A modular power converter for providing power to a power consuming device, the modular power converter comprising:
a core power conversion module for receiving power from a power source and converting said power from a first set of power characteristics to a second set of power characteristics wherein said core power conversion module has at least one power conversion switch and an output connector; and
an application specific module adapted to be removably coupled to said output connector wherein said application specific module contains some power components and application specific components designed to interface said core power conversion module to a particular power consuming application

2. The modular power converter of claim 1 wherein said at least one power conversion component is constructed on a sub panel which is coupled to said core power conversion module.

3. The modular power converter of claim 1 wherein said core power conversion module is adapted to be connected in parallel with at least one additional core power conversion module such that a power output of said core power conversion modules is combined.

4. The modular power converter of claim 1 wherein said application specific module may contain at least one of a filter, a contactor, a relay and a current sensor.

5. The modular power converter of claim 1 wherein said core power conversion module includes a thermal management system.

6. The modular power converter of claim 1 wherein said modular power supply is configured to allow for bi-directional or non-regenerative flow.

7. The modular power converter of claim 1 wherein a bus capacitance of said core power conversion module is approximately equally distributed along said output.

8. A power converter for receiving electrical power having a first set of parameters and converting said electrical power into electrical power having a second set of parameters, said power supply comprising a power conversion module adapted to receive one of a plurality of application specific modules wherein said power conversion module has at least one power conversion switch and wherein said application specific module has at least one power component.

9. The power converter of claim 8 wherein said power conversion module has a bus.

10. The power converter of claim 9 wherein said power conversion module is adapted to be connected in parallel with a second power conversion module such that said bus of said power conversion module is connected in parallel with a bus of said second power conversion module.

11. The power converter of claim 8 wherein said at least one power component is mounted on a sub panel assembly of said power conversion module.

12. The power converter of claim 8 wherein said power converter is configured to allow for bi-directional or non-regenerative power flow.

13. The power converter of claim 8 wherein said application specific module may contain at least one of a filter, a contactor, a relay and a current sensor.

14. The modular power converter of claim 8 wherein said power conversion module includes a thermal dissipation system.

15. A modular power converter system adapted to provide varying amounts of power having different power characteristics, said power converter comprising a core module having at least one power converter switch for receiving power from a power source and converting said power to a bus voltage and coupling said bus voltage to a bus wherein said core module has an output connector adapted to receive at least one of a plurality of application specific power inverter modules such that said bus voltage is coupled to said application specific module.

16. The modular power converter system of claim 15 wherein said core module is configured to be connected in parallel with a second core module such that said bus of said core module is electrically coupled to a bus of said second core module.

17. The modular power converter system of claim 15 wherein said at least one power converter switch is mounted on an option board of said core module.

18. The modular power converter system of claim 15 wherein said modular power converter is configured to allow for bi-directional or non-regenerative power flow.

19. The modular power converter system of claim 15 wherein said application specific power inverter module may contain at least one of a filter, a contactor, a relay and a current sensor.

20. The modular power converter system of claim 1 wherein said core module includes an option board coupling for receiving one of a plurality of option boards.

21. A modular power converter design comprising:
mechanical packaging means that are modular and scalable;
power conversion means that are modular and scalable;
thermal management means that are modular and scalable;
hardware logic that is modular and configurable; and
control software that is modular and configurable.

22. The modular power converter of claim 21 wherein said converter can be configured to support power conversion from any AC or DC source to any AC or DC load.

23. The modular power converter of claim 21 wherein said converter is configured as a bidirectional wind generator drive.
